# EUROPEAN PATENT SPECIFICATION

(11) **EP 1 056 162 B1**
(45) Date of publication and mention of the grant of the patent: **07.02.2007**
(21) Application number: 00201905.7
(22) Date of filing: 26.05.2000
(51) Int. Cl.: H01R 13/53

(54) **Control of field at high voltage**
Feldsteuerung bei hoher Spannung
Commande de champ à haute tension

(30) Priority: 28.05.1999 SE 9901986
(43) Date of publication of application: 29.11.2000
(73) Proprietor: ABB AB, 721 83 Västeras (SE)
(72) Inventor: Höglund, Mikael, 44 191 Alingsas (SE); Svedjehed, Lard Olof, 771 33 Ludvika (SE); Johansson, Lars, Hagge, 771 90 Ludvika (SE); Johansson, Hans, 771 40 Ludvika (SE); Svahn, Jörgen, 411 29 Göteborg (SE)
(74) Representative: Dahlstrand, Björn

(56) References cited:
- DE-U- 7 434 286
- GB-A- 967 853

## Description

### TECHNICAL FIELD

The present invention relates to a device for controlling an electric field at, for example, a connection, a termination or a joint, of a high-voltage cable.

In conventional field control, there is usually used geometrical field control or resistive field control. The electric potential between the live part and ground is distributed with the aid of a material with a suitable resistance. The disadvantage of this known field control is that, at rapid voltage variations, the resistive material does not have time to control the field, which leads to high stresses in the material.

Document GB-A-967853 discloses capacitive field control (in fig. 21).

The object of the present invention is to improve the control of the electric field in order to reduce the risk of harmful charges building up and of high stresses arising upon rapid changes of the voltage.

This object is achieved according to the invention by a combination of capacitive field control, comprising a plurality of capacitive layers arranged substantially concentrically between an inner live conductor and an outer ground potential, and geometrical field control, comprising a,stress cone, which is arranged in electrical contact with the above-mentioned ground potential.

According to the prior art, the insulation screen of the cable is removed before mounting of a termination, a connection, a joint or the like cable device. The stress of the electric field is highest in regions where the cable has less resistance to electric breakdown than in other regions. One such region is, consequently, where the insulation screen of the cable is mechanically removed.

There are reasons to assume that the problems which jeopardize the mode of operation of the installation, in connection with a varying voltage, are caused, inter alia, by the build-up of space charges in those boundary layers which occur between the insulation and the accessories in cable junctions. To solve these problems, prior art cable junctions have been complicated and of unreliable design, since they have to handle the electrical stresses which may arise. The prior art cable junctions were expensive and also involved a long time of delivery, since they had to be adapted in situ to the geometry and electrical stresses of the cable.

The invention will now be described in greater detail with reference to the accompanying drawings, wherein
Figure 1 shows a schematic view of a cable joint according to the invention,
Figure 2 shows a connection sleeve included in the above-mentioned cable joint, and
Figure 3 shows a connection part for the above-mentioned cable joint.

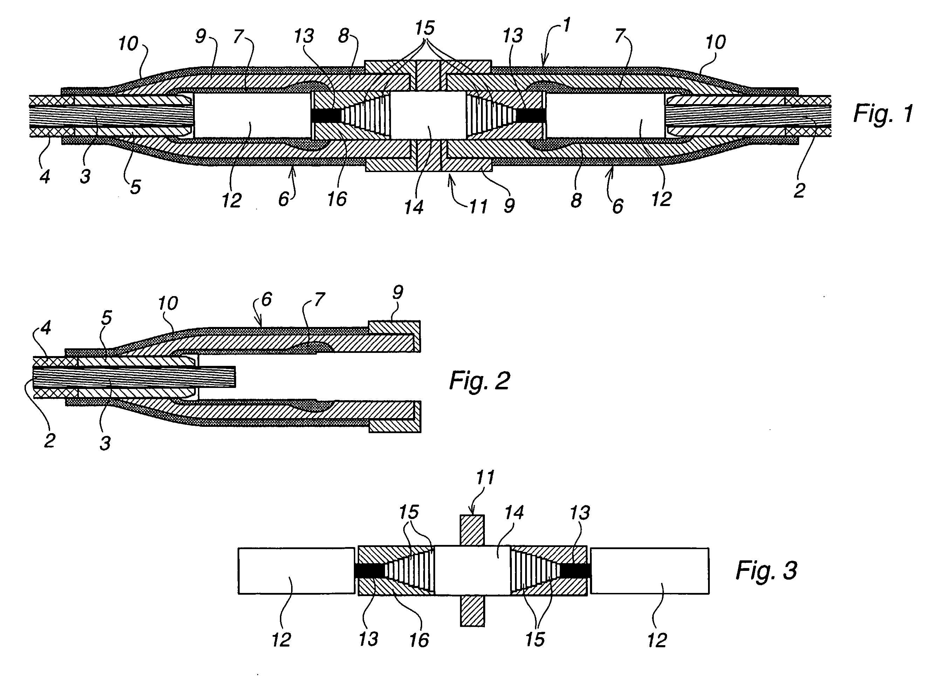

In the drawings, Figures 1 to 3 show a cable joint 1 and a cable 2, with an inner conductor 3, an outer conductive layer 4 and an insulation 5. The cable joint 1 comprises a connection sleeve 6 for the respective cable 2.

Each connection sleeve 6 exhibits an inner electrode 7, an insulating layer 8 and an outer conductive layer 9. The outer conductive layer 9 is formed with a stress cone 10 for geometrical field control. The inner electrode 7 is electrically connected to a connection part 11, which is in contact with the inner live conductor 3 of the cable 2. The outer conductive layer 9 is electrically connected to ground potential. The stress cone 10 extends with increasing diameter from that end of the connection sleeve 6 which is nearest the ground potential, and at least partly towards that end of the connection sleeve 6 which is nearest the live conductor 3.

The connection part 11 comprises joint sleeves 12 for connection of the inner conductor 3 of the respective cable 2 to an inner live conductor 13, which extends through the connection part 11, a capacitive control 14, consisting of a plurality of wound capacitive layers 15, preferably of aluminium laminate, arranged substantially concentrically between the inner live conductor 13 and an outer ground potential. The capacitive layers 15 exhibit a limited extent along the conductor 13 and terminate successively at different distances from one another along the conductor 13, to thus control the difference in potential between the different layers 15 over a certain length. The capacitive layers 15 are enclosed in an epoxy body 16, but also other suitable materials may be used.

The cable joint 1 is suitably cylindrical, although other geometrical shapes are feasible, and the connection sleeves 6 are substantially made of EPDM rubber, but also other plastics or elastomers are possible.

By means of the present invention, it is possible to manufacture the capacitive control 14 in one and the same size for several different dimensions of the connection sleeves 6. It is also possible to insert the capacitive control 14 as a body in, for example, a cable termination, a bushing, a branch joint, an apparatus connection, or similar equipment, and to utilize one and the same connection sleeve 6 for connection to the capacitive control 14.

## Claims

1. A device for controlling an electric field at, for example, a connection, a termination, or a joint (1) of a high-voltage cable (2), **characterized by** a combination of capacitive field control (14), comprising a plurality of capacitive layers (15) arranged substantially concentrically between an inner live conductor (13) and an outer ground potential (9), and geometrical field control, comprising a stress cone (10) which is arranged in electrical contact with said ground potential.

2. A device according to claim 1, **characterized in that** the capacitive layers (15) exhibit a limited extent along the conductor (13) and are terminated successively at different distances from one another along the conductor (13), to thus control the difference in potential between the various layers (15) over a certain length.

3. A device according to claim 2, **characterized in that** the stress cone (10), for the geometrical field control, extends with increasing diameter from that end of a connection sleeve (6) which is located nearest the ground potential of the cable (2), and at least partially towards that end of the connection sleeve (6) which is located nearest the live conductor (3) of the cable (2).

## Patentansprüche

1. Vorrichtung zum Steuern eines elektrischen Felds an zum Beispiel einer Verbindung, einem Abschluss oder einem Anschluss (1) eines Hochspannungskabels (2), **gekennzeichnet durch** eine Kombination einer kapazitiven Feldsteuerung (14), umfassend mehrere kapazitive Schichten (15), die im Wesentlichen konzentrisch zwischen einem inneren stromführenden Leiter (13) und einem äußeren Erdpotenzial (9) angeordnet sind, und einer geometrischen Feldsteuerung, umfassend einen Spannungskonus (10), das in elektrischem Kontakt mit dem Erdpotenzial angeordnet ist.

2. Vorrichtung nach Anspruch 1, **dadurch gekennzeichnet, dass** die kapazitiven Schichten (15) eine begrenzte Ausdehnung entlang des Leiters (13) zeigen und nacheinander in verschiedenen Entfernungen voneinander entlang des Leiters (13) abgeschlossen sind, um so den Unterschied im Potenzial zwischen den verschiedenen Schichten (15) über eine bestimmte Länge zu steuern.

3. Vorrichtung nach Anspruch 2, **dadurch gekennzeichnet, dass** der Spannungskonus (10) sich, zur geometrischen Feldsteuerung, mit steigenden Durchmesser von dem Ende einer Verbindungshülse (6), das sich am nächsten zu dem Erdpotenzial des Kabels (2) befindet und mindestens teilweise zu dem Ende der Verbindungshülse (6) erstreckt, das sich am nächsten an dem stromführenden Leiter (3) des Kabels (2) befindet.

## Revendications

1. Dispositif de commande d'un champ électrique, par exemple à une connexion, à une borne ou à joint (1) d'un câble (2) de haute tension, **caractérisé par** une combinaison d'une commande (14) de champ capacitive, comprenant une couche (15) capacitive, comprenant une pluralité de couches (15) capacitives disposées sensiblement concentriquement entre un conducteur (13) intérieur sous tension et un potentiel (9) extérieur à la terre et une commande de champ géométrique, comprenant un cône (10) de contrainte qui est en contact électrique avec le potentiel de terre.

2. Dispositif de commande d'un champ électrique selon la revendication 1, **caractérisé en ce que** les couches (15) capacitives présentent une étendue limitée le long du conducteur (13), et se terminent successivement à des distances différentes les unes des autres le long du conducteur (13) en réglant ainsi la différence de potentiel entre les diverses couches (15) sur une certaine longueur.

3. Dispositif de commande d'un champ électrique, selon la revendication 2, **caractérisé**
**en ce que** le cône (10) de contrainte pour la commande de champ géométrique s'étend en ayant un diamètre croissant de l'extrémité d'un manchon (6) de connexion, qui est disposé le plus près du potentiel de terre du câble (2) en allant au moins en partie vers l'extrémité du manchon (6) de connexion, qui est disposée la plus près du conducteur (3) sous tension du câble (2).
